Europäisches Patentamt

European Patent Office

Office européen des brevets

(19)

(11) Numéro de publication: **0 006 794**
**B1**

(12) **FASCICULE DE BREVET EUROPEEN**

(45) Date de publication du fascicule du brevet: **24.03.82**

(51) Int. Cl.³: **G 02 F 1/17**

(21) Numéro de dépôt: **79400384.8**

(22) Date de dépôt: **12.06.79**

(54) Procédé de commande d'une cellule d'affichage électrolytique et dispositif de mise en oeuvre.

(30) Priorité: **19.06.78 FR 7818223**

(43) Date de publication de la demande:
**09.01.80 Bulletin 80/1**

(45) Mention de la délivrance du brevet:
**24.03.82 Bulletin 82/12**

(84) Etats contractants désignés:
**AT CH DE GB IT NL SE**

(56) Documents cités:
DE - A - 2 654 267
DE - A - 2 733 529
DE - A - 2 739 613
FR - A - 2 175 148
FR - A - 2 260 167
FR - A - 2 323 203
US - A - 3 096 271

NACHRICHTENTECHNISCHE ZEITSCHRIFT
N.T.Z., vol. 28, n° 6, juin 1975
Berlin DE
J. H. LORTEIJE "A Survey of Drive Methods
for Gasdischarge, Light Emitting Diode, Liquid
Crystal and Electrochromic Displays",
pages 196—200

(73) Titulaire: **COMMISSARIAT A L'ENERGIE
ATOMIQUE Etablissement de Caractère
Scientifique Technique et Industriel
B.P. 510
F-75752 Paris Cedex 15 (FR)**

(72) Inventeur: **Delapierre, Gilles
216, Percevalière
F-38170 Seyssinet (FR)**
Inventeur: **Meyer, Robert
Chemin Bonatière Saint Nazaire Les Eyms
F-38330 Saint Ismier (FR)**

(74) Mandataire: **Mongrédien, André et al,
c/o Brevatome 25, rue de Ponthieu
F-75008 Paris (FR)**

Courier Press, Leamington Spa, England.

Procédé de commande d'une cellule d'affichage électrolytique et dispositif de mise en oeuvre

La présente invention a pour objet un procédé de commande d'une cellule d'affichage électrolytique, et un circuit pour sa mise en œuvre. Elle trouve une application dans l'affichage de caractères alphanumériques ou analogiques.

Une cellule d'affichage électrolytique comprend, très schématiquement, un électrolyte qui, dans le cas envisagé ici, contient un halogénure métallique, inséré entre des électrodes semi-transparentes de formes appropriées et une contre-électrode. Une source de tension permet de porter les électrodes à des potentiels déterminés dans le but de provoquer soit le dépôt d'un film métallique (pour l'affichage d'un caractère), soit la redissolution de ce film (pour l'effacement du caractère affiché).

Le dépôt de métal M sur une électrode correspond à la réaction $M^+ + e^- \rightarrow M$.

La redissolution du métal correspond à la réaction $M \rightarrow M^+ + e^-$.

Dans un tel moyen d'affichage, l'épaisseur du film métallique déposé est directement proportionnelle à la charge électrique qui a traversé la cellule. L'effacement complet de ce film nécessite donc qu'une charge au moins égale traverse la cellule, mais en sens contraire. Un défaut de charge à l'effacement conduirait à une accumulation de métal sur l'électrode, mais inversement, un excès de charge à l'effacement peut conduire à des réactions secondaires dans l'électrolyte.

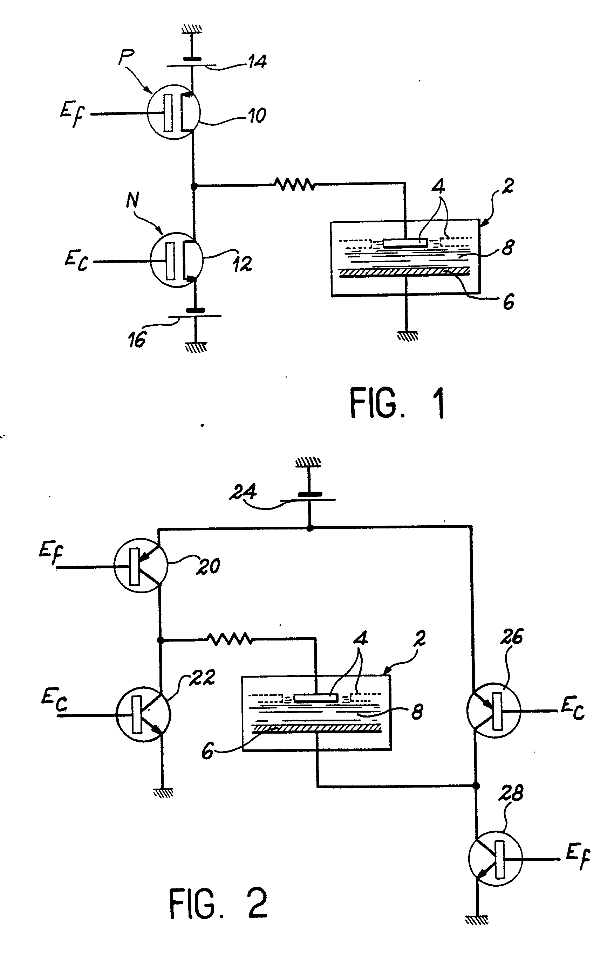

On s'efforce donc, dans l'art antérieur, de commander l'écriture et l'effacement, par des moyens qui assurent l'égalité des charges. Pour cela on utilise des dispositifs tels que ceux des figures 1 et 2.

La figure 1 représente une cellule d'affichage électrolytique 2 comprenant des électrodes 4, une contre-électrode 6 et une solution électrolytique 8; cette cellule est commandée par un circuit à deux transistors MOS complétementaires 10 et 12, respectivement à canal P et N, sur les portes desquels sont appliqués des signaux Ef et Ec respectivement d'effacement et d'écriture. Deux sources de tension 14 et 16 (généralement constituées par des piles, par exemple de 1.5V) alimentent le dispositif.

Pendant la période d'écriture le transistor 12 est conducteur; pendant la période d'effacement c'est le transistor 10 qui est conducteur. Le courant d'écriture dépend donc de la résistance du canal du transistor 12 et le courant d'effacement de celle du canal du transistor 10. Or, les valeurs de ces résistances sont soumises à une certaine dispersion, d'un transistor à l'autre, de sorte que si l'on désire obtenir un dépassement de charge minimum à l'effacement, on doit régler ce dépassement sur le cas le plus défavorable. Mais alors, dans certains cas, ce dépassement peut devenir excessif.

En outre, la pile 14 qui sert à l'effacement s'use plus vite que la pile 16 qui sert à l'écriture puisque l'effacement consomme légèrement plus de charges que l'écriture. La tension délivrée par la pile d'effacement 14 peut tomber par exemple à 1,2V alors que celle de la pile d'écriture 16 conserve sa valeur de 1,5V. Le circuit doit donc être conçu pour donner un dépassement correct même en cas de déséquilibre des sources d'alimentation.

Mais ceci implique un dépassement en charge à l'effacement d'au moins 20% lorsque les deux piles sont neuves et délivrent toutes deux la même tension, ce qui est prohibitif.

L'une des solutions envisagées initialement par les inventeurs pour résoudre ce problème de l'usure dissymétrique des piles est illustrée par la figure 2. Le circuit représenté sur cette figure comprend deux transistors complémentaires 20 et 22 et une source de tension unique 24 qui sert aussi bien à l'effacement qu'à l'écriture. La contre-électrode 6 est réunie à deux autres transistors 26 et 28, le premier étant conducteur pendant l'écriture et le second pendant l'effacement.

Cette solution présente un inconvénient grave: les transistors 26 et 28 sont traversés par la totalité des courants circulant à travers les différentes électrodes de la cellule et, de ce fait, ils doivent être de grande dimension. Ils sont donc coûteux. En outre, il est impossible, avec ce circuit, d'écrire une électrode pendant qu'on en efface une autre, et ainsi de diviser par deux le temps de réponse de l'afficheur. Cet inconvénient s'accompagne d'un désagrément quant à l'aspect offert par l'afficheur au moment d'un changement de caractère affiché. Pour un dispositif à sept segments, lorsqu'on passe, par exemple, de l'affichage d'un 2 à l'affichage d'un 3, on voit successivement les trois caractères suivants:

ce qui n'est guère agréable pour l'utilisateur.

Il apparaît ainsi que l'opération d'effacement dans une cellule d'affichage électrolytique est un problème difficile à résoudre si l'on veut obtenir de bonnes performances, et que les procédés et dispositifs de l'art antérieur sont toujours d'une assez grande complexité. L'invention à justement pour but de simplifier le procédé de commande et les dispositifs d'application.

A cette fin, pour commander l'effacement sur une électrode c'est-à-dire pour redissoudre la couche métallique déposée, lors d'une opération d'écriture antérieure, on applique à cette électrode une tension positive qui est voisine de la tension de seuil de formation électrochimique de l'halogène correspondant à l'halogénure utilisé. De cette manière, tant que le métal est présent sur l'électrode, la dissolution a lieu sous un courant relativement élevé correspondant à la réaction $M \rightarrow M^+ + e^-$ car la tension de seuil de dissolution des métaux utilisés, l'argent notamment, est pratiquement nulle et la tension appliquée lui est toujours supérieure; puis, dès que la dissolution de la couche métallique est terminée le courant tombe automatiquement à une valeur faible correspondant à la naissance de la réaction $2I^- \rightarrow I_2 + 2e^-$ (dans le cas où l'halogénure est un iodure) car la tension appliquée est voisine de la tension de seuil correspondant à la formation de l'halogène.

Ainsi, l'invention préconise, dans la gamme des tensions positives nécessaires à la redissolution du métal, l'utilisation d'une tension située dans une zone particulière qui est celle de la tension de seuil de formation électrochimique de l'halogène utilisé.

Si l'on veut bénéficier d'un léger courant de fuite sur les électrodes effacées (pour parfaire la re-dissolution du métal sur les défauts éventuels), on maintiendra la tension d'effacement à une valeur légèrement supérieure à la tension de seuil de formation de l'halogène.

Dans le cas où l'halogénure métallique est l'iodure d'argent, on applique une tension d'effacement de l'ordre de +0,7V si l'on veut maintenir un léger courant après dissolution et, dans le cas contraire, une tension de l'ordre de +0,5V.

La présente invention a également pour objet un circuit de commande d'une cellule d'affichage électrolytique, pour la mise en œuvre du procédé qui vient d'être défini; la cellule comprend une pluralité d'électrodes présentant des formes appropriées à l'affichage de caractères, une contre-électrode et un électrolyte à base d'halogénure métallique; le circuit comprend une première source de tension négative d'écriture, une seconde source de tension positive d'effacement et un organe de commutation permettant de relier chaque électrode soit à ladite première source, soit à ladite seconde source; le circuit de l'invention est caractérisé en ce que ladite seconde source délivre une tension qui est voisine de la tension de seuil de formation électrochimique de l'halogène.

L'organe de commutation peut relier en permanence l'électrode à effacer à ladite seconde source, ce qui simplifie considérablement le dispositif par rapport à ceux de l'art antérieur.

Dans les définitions qui précèdent, l'expression "voisine de la tension de seuil" signifie que l'on se place dans la zone correspondant à la vague polarographique caractéristique de la formation électrochimique de l'halogène, vague marquant l'apparition d'un courant lié à la réaction d'oxydation électrochimique affectant l'halogène considéré.

De toute façon, les caractéristiques et avantages de l'invention apparaîtront mieux après la description qui suit, d'exemples de réalisation donnés à titre explicatif et nullement limitatif, en référence aux dessins annexés sur lesquels:

— la figure 1, déjà décrite représente un circuit de commande de l'art antérieur possédant une source de tension d'écriture et une source de tension d'effacement;

— la figure 2, déjà décrite, représente un autre circuit de l'art antérieur possédant une seule source de tension d'écriture et d'effacement;

— la figure 3 représente la schéma synoptique d'un circuit de commande selon l'invention;

— la figure 4 représente un mode particulier de réalisation du circuit de l'invention;

— la figure 5 représente une variante du circuit de commande de l'invention dans laquelle on passe d'un caractère affiché à un autre caractère par l'intermédiaire d'un état où toutes les électrodes sont excitées;

— la figure 6 est un chronogramme de différents signaux apparaissant dans le circuit de la figure 5.

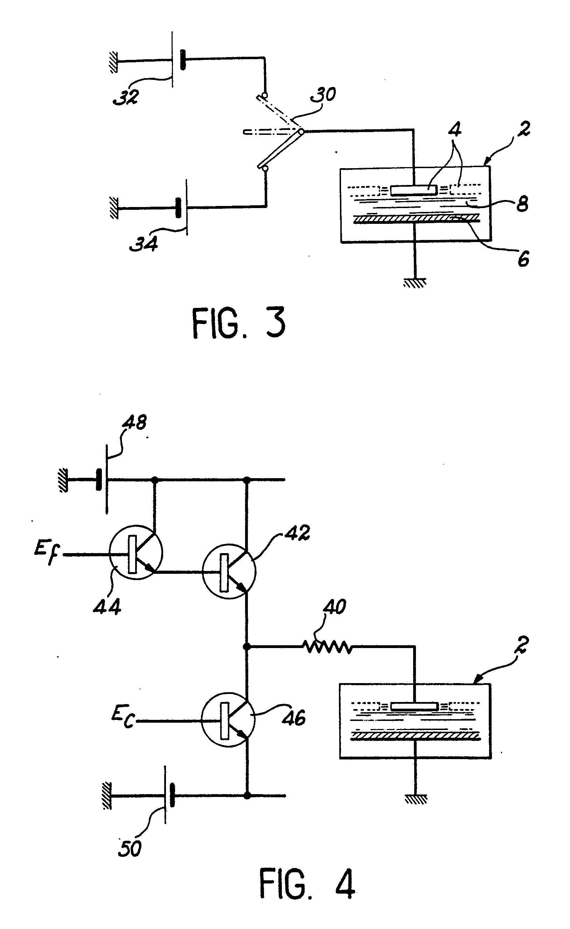

Les figures 1 et 2 ont déjà été décrites en introduction. En ce qui concerne le circuit de l'invention, il est représenté schématiquement sur la figure 3. La cellule d'affichage électrolytique 2 a ses électrodes 4 reliées à un organe de commutation 30 et sa contre-électrode 6 reliée à la masse. L'électrolyte 8 comprend un halogénure métallique, par exemple l'iodure d'argent. L'organe 30 relie l'électrode 4 soit à une source 32 de tension négative d'écriture, soit à une source 34 de tension positive d'effacement. Une position intermédiaire de maintien de l'état écrit est également prévue.

Selon l'invention, la source 34 délivre une tension d'effacement voisine de la tension de seuil de formation électrochimique de l'halogène correspondant à l'halogénure métallique de l'électrolyte 8. Lorsque cet halogénure est l'iodure d'argent, et que la contre-électrode est en argent, la tension de seuil de formation de l'iode est de l'ordre de 0,7V. C'est la tension délivrée par la source 34.

Le schéma de la figure 4 représente un mode particulier de réalisation d'un circuit selon l'invention, qui tire parti de la chute de tension émetteur-base dans un transistor, pour obtenir une tension d'effacement appropriée.

Le circuit représenté sur la figure 4 comprend une résistance 40, des transistors d'effacement 42 et 44, un transistor d'écriture 46, deux piles 48 et 50 d'environ 1,5V chacune et deux connexions Ef et Ec de commande d'effacement et d'écriture.

La correspondance entre les tensions appliquées sur les connexions Ef et Ec et les opérations commandées par ce circuit est précisée dans le tableau ci-dessous:

| Opération | Ec (V) | Ef (V) |
|---|---|---|
| Ecriture | + 1,5 | − 1,5 |
| Maintien état écrit | − 1,5 | − 1,5 |
| Effacement ou maintien état effacé | − 1,5 | + 1,5 |

La chute de tension émetteur-base des transistors d'effacement 42 et 44 est d'environ 0,4V pour un courant d'émetteur faible, ce qui laisse subsister sur l'afficheur 2 une tension d'environ 0,7V. Cette tension est légèrement supérieure à la tension nécessaire à la formation d'iode sur l'électrode.

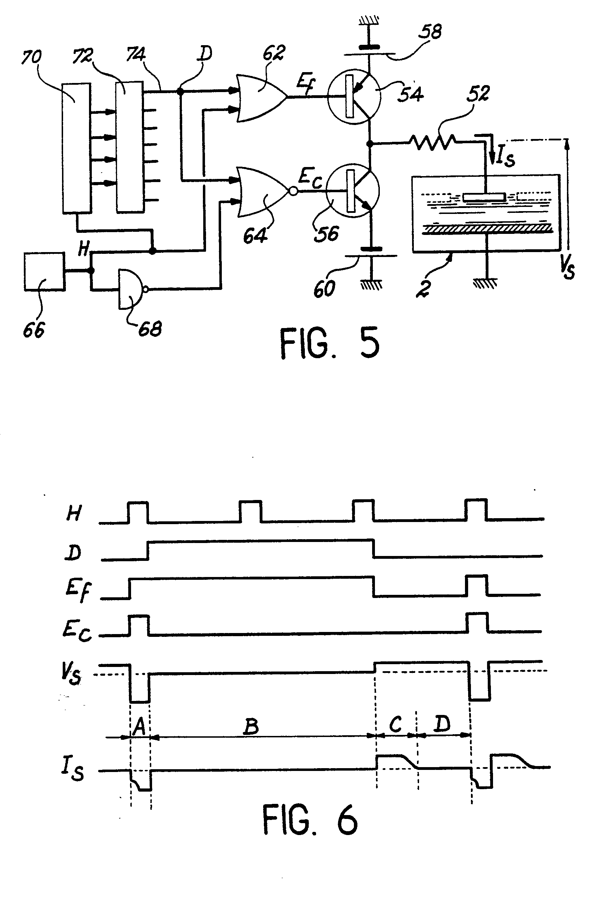

Le procédé et le circuit de l'invention se prêtent à une commande particulière des afficheurs électrolytiques dans laquelle, pour passer d'un caractère affiché à un autre caractère, on applique un signal intermédiaire d'écriture sur les électrodes non inscrites sur le caractère précédent. C'est ce qui va maintenant être décrit à l'aide des figures 5 et 6.

Le circuit de commande représenté sur la figure 5 comprend une résistance 52 disposée entre une électrode de la cellule d'affichage 2 et les collecteurs de deux transistors 54 et 56 dont les émetteurs sont reliés respectivement à une source de tension positive 58 (de valeur comprise entre 0,5 et 0,8V) et une source de tension négative 60 (de valeur voisine de −1,5V). Les bases de ces transistors sont reliées, par des connexions Ef et Ec, aux sorties de deux portes logiques respectivement de type OU (porte 62) et NON-OU (porte 64). Ces portes sont commandées par des impulsions provenant d'une horloge 66, directement pour la porte 62 et après inversion par une porte inverseuse 68 pour la porte 64. Un compteur 70 reçoit les impulsions de l'horloge 66 et alimente un décodeur 72 à autant de sorties que d'électrodes. La sortie 74 représentée véhicule un signal binaire de valeur "1" ou "0" selon l'opération à effectuer sur l'électrode de la cellule d'affichage.

Sur la figure 5 sont mentionnés en outre différents symboles pour des tensions ou courants apparaissant en différents points du circuit:

— H pour les impulsions de l'horloge 66,
— D pour le signal délivré par le décodeur 72,
— Vs pour la tension appliquée à l'électrode,
— Is pour le courant circulant à travers cette électrode,
— Ef et Ec pour les tensions d'effacement et d'écriture appliquées sur la base des transistors.

Le fonctionnement de ce circuit est décrit à l'aide des chronogrammes de la figure 6 qui illustrent les variations de ces différentes grandeurs. Sur la dernière ligne qui est relative au courant Is, sont indiquées les différentes opérations accomplies sur la cellule d'affichage à savoir:

— A: écriture,
— B: état écrit,
— C: effacement,
— D: état effacé.

On notera que le circuit de la figure 5 délivre une impulsion d'écriture avant chaque changement d'état du décodeur (pendant la phase A). Cela signifie qu'on passe de l'affichage d'un caractère à un autre caractère par l'intermédiaire d'un état d'écriture uniforme. Par exemple, lorsqu'on passe de l'affichage d'un 2 à l'affichage d'un 3 avec un dispositif à sept segments, on observe la suite de caractères suivante:

le caractère intermédiaire étant justement obtenu par l'impulsion d'écriture qui correspond à la phase A.

Si cette séquence consomme légèrement plus d'énergie (25%) que la séquence idéale qui consisterait à effacer le segment "e" puis à écrire le segment "c", elle en consomme beaucoup moins que la séquence qui consiste à effacer les segments "a, b, d, e, g", puis à écrire les segments "a, b, c, d, g".

**Revendications**

1. Procédé de commande d'une cellule d'affichage électrolytique comprenant des électrodes de forme appropriée à l'affichage, une contre-électrode et un électrolyte à base d'halogénure métallique, procédé dans lequel, pour obtenir une écriture sur l'une des électrodes, on applique à cette électrode une impulsion de tension négative, ce qui provoque le passage d'un courant dans un sens et le dépôt d'une couche de métal sur l'électrode et pour obtenir l'effacement sur cette électrode on applique à cette électrode une impulsion de tension positive, ce qui provoque le passage d'un courant dans un sens inverse et la dissolution de ladite couche de métal, l'impulsion d'effacement étant appliquée pendant une durée suffisante pour que la dissolution soit complète, caractérisé en ce qu'on applique pour l'effacement une impulsion de tension de valeur voisine de la tension de seuil de formation électrochimique de l'halogène correspondant à l'halogénure.

2. Circuit de commande d'une cellule d'affichage électrolytique, pour la mise en œuvre du procédé selon la revendication 1, la cellule comprenant des électrodes de forme appropriée à l'affichage, une contre-électrode et un électrolyte à base d'halogénure métallique, ce circuit comprenant une première source de tension négative d'écriture, une seconde source de tension positive d'effacement et un organe de commutation permettant de relier chaque électrode, soit à ladite première source, pour une écriture sur cette électrode, soit à ladite seconde source pour un effacement, caractérisé en ce que ladite seconde source délivre une tension voisine de la tension de seuil de formation électrochimique de l'halogène correspondant à l'halogénure.

3. Circuit de commande selon la revendication 2, caractérisé en ce que l'organe de commutation est apte à relier en permanence une électrode à effacer à la seconde source.

## Claims

1. Process of controlling an electrolytic display cell comprising electrodes of an appropriate form for display, a counter-electrode and a metal halide-based electrolyte, in which process, for character-formation on one electrode, a negative voltage impulse is applied to that electrode whereby a current is passed in one direction and a metal layer is formed on the electrode and, for character-removal, a positive voltage impulse is applied to the electrode whereby a current is passed in the reverse direction and the metal layer is dissolved, the character-removal impulse being passed for a period sufficient for complete dissolving, characterized in that character-removal is achieved by passing a voltage impulse having a value approximating the threshold voltage for electrochemical formation of the halogen corresponding to the halide.

2. Control circuit for an electrolytic display cell for carrying out a process according to Claim 1, the cell comprising electrodes of an appropriate form for display, a counter-electrode and a metal halide-based electrolyte, the circuit comprising a first source of negative voltage for character-formation, a second source of positive voltage for character-removal, and a commutator adapted for alternate connection of each electrode to the first source for character-formation on the electrode, and to the second source for character-removal, characterized in that the second source delivers a voltage approximating the threshold voltage for electrochemical formation of the halogen corresponding to the halide.

3. Control circuit according to Claim 2 characterized in that the commutator is adapted to connect permanently a character-removal electrode to the second source.

## Patentansprüche

1. Verfahren zum Steuern einer elektrolytischen Anzeigezelle, welche Elektroden in einer zur Anzeige geeigneten Form, eine Gegenelektrode und einen Elektrolyten auf der Basis von Metallhalogen umfaßt, wobei, um ein Einschreiben an einer der Elektroden zu erzielen, an diese Elektrode ein negativer Spannungsimpuls angelegt wird, welcher den Durchgang eines Stromes in einer Richtung und das Niederschlagen einer Metallschicht auf der Elektrode hervorruft, und wobei, um ein Löschen an dieser Elektrode zu erhalten, an diese Elektrode ein positiver Spannungsimpuls gelegt wird, welcher den Durchgang eines Stromes in der umgekehrten Richtung und das Auflösen der genannten Metallschicht hervorruft, und wobei der Löschimpuls während einer ausreichend langen Zeit angelegt wird, damit eine vollständige Auflösung erreicht wird, dadurch gekennzeichnet, daß zum Löschen ein Spannungsimpuls mit einem Wert angelegt wird, welcher der Schwellenspannung zur elektrochemischen Halogenbildung bei dem entsprechenden Halogen benachbart ist.

2. Steuerschaltkreis für eine elektrolytische Anzeigezelle zur Durchführung des Verfahrens gemäß Patentanspruch 1, mit einer Zelle, welche Elektroden in einer zur Anzeige geeigneten Form, eine Gegenelektrode und einen Elektrolyten auf der Basis von Metallhalogen umfaßt, wobei der Schaltkreis eine erste, negative Spannungsquelle zum Schreiben, eine zweite, positive Spannungsquelle zum Löschen und einen Umschalter aufweist, durch den jede Elektrode entweder mit der ersten Quelle zum Einschreiben auf dieser Elektrode oder mit der zweiten Quelle zum Löschen verbindbar ist, dadurch gekennzeichnet, daß die zweite Quelle eine Spannung liefert, welche der Schwellenspannung zur elektrochemischen Halogenbildung bei dem entsprechenden Halogen benachbart ist.

3. Steuerschaltkreis gemäss Patentanspruch 2, dadurch gekennzeichnet dass der Umschalter, eine zu löschende Elektrode in Dauersitzung mit der zweiten Quelle zu verbinden, fähig ist.

FIG. 1

FIG. 2

FIG. 3

FIG. 4

FIG. 5

FIG. 6